# EUROPÄISCHE PATENTANMELDUNG

(11) **EP 3 103 591 A1**
(43) Veröffentlichungstag der Anmeldung: **14.12.2016**
(21) Anmeldenummer: 15171093.6
(22) Anmeldetag: 09.06.2015
(51) Int. Cl.: B25D 17/00, B25B 21/00, E21D 20/00, B25B 23/00, B23B 31/117, B25B 23/10

(54) **WERKZEUGADAPTER**

(71) Anmelder: HILTI Aktiengesellschaft, 9494 Schaan (LI)
(72) Erfinder: Ginter, Herbert, 87656 Germaringen (DE)
(74) Vertreter: Hilti Aktiengesellschaft Corporate Intellectual Property

(57) **Zusammenfassung**

Ein Werkzeugadapter mit einem starren Grundkörper (10) hat ein antriebsseitiges Ende (12) und ein entgegengesetztes, abtriebsseitiges Befestigungsende (16), an dem ein flexibles Zugmittel (32) angebracht ist, welches um ein Befestigungselement, insbesondere eine Ankerstange oder Betoneisen wickelbar ist. Das umwickelte Befestigungselement wird in einer Aufnahme (28) am abtriebsseitigen Befestigungsende (16) eingesetzt.

## Beschreibung

Die Erfindung betrifft einen Werkzeugadapter, mit einem starren Grundkörper mit einem antriebsseitigen, zur Ankoppelung an einen Drehantrieb vorgesehenen Ende und einem entgegengesetzten, abtriebsseitigen Befestigungsende zur lösbaren Anbringung eines anzutreibenden Befestigungselements, insbesondere einer Ankerstange oder eines Betoneisens.

Solche Werkzeugadapter werden üblicherweise in ein Handbohrgerät oder einen Bohrhammer, Schrauber oder Schlagschrauber eingesetzt. Ankerstangen werden in ein Bohrloch eingebracht, in das zuvor eine aushärtende Substanz eingefüllt wurde. Die aushärtende Substanz kann in Form eines Strangs oder in Form einer von der Ankerstange zu zerstörenden Patrone (üblicherweise Folienpatrone oder Glaspatrone) vorliegen. Generell wird bei solchen sogenannten Klebeankern zwischen Verbundankern und chemischen Injektionssystemen unterschieden. Erstere beziehen sich auf die Verwendung einer Patrone, letztere auf das Einbringen der aushärtenden Substanz in Strangform. Wenn eine Patrone verwendet wird, so sind in dieser üblicherweise mehrere Komponenten voneinander getrennt untergebracht. Beim Zerstören werden diese Komponenten dann miteinander in Kontakt gebracht, sodass ein Aushärteprozess gestartet wird. Wichtig für eine homogene Füllung des Bohrlochs und eine gleichmäßige Aushärtung ist eine gute Durchmischung der Komponenten. Diese wird durch das sich drehend eingebrachte Befestigungselement sichergestellt.

Alternativ zu den Ankerstangen bezieht sich die Erfindung aber auch auf einen Werkzeugadapter, bei dem andere Befestigungselemente, die in das Werkstück eingedreht werden sollen, drehangetrieben und evtl. auch durch axiale Schläge in das Werkstück eingebracht werden, beispielsweise Schraubbolzen.

Üblicherweise ist das antriebsseitige Ende ein vorstehender Schaft, der zwar kreiszylindrisch ausgeführt sein kann, aber auch mit einer Drehmitnahme oder einer unrunden Kontur ausgeführt sein kann, beispielsweise bei den sogenannten SDS-Systemen.

Gattungsgemäße Werkzeugadapter, die für Ankerstangen verwendet werden, sind aus der EP 1 162 036 A2, der DE 32 32 181 A1 und der DE 2 735 726 A1 bekannt. Bei diesen Werkzeugadaptern sind verschiedene Geometrien für die Koppelung des Werkzeugadapters mit dem Drehantrieb und/oder mit der Ankerstange möglich. Bezüglich der Aufnahme und Koppelung des Werkzeugadapters an das Befestigungselement besteht im Stand der Technik der Nachteil, dass die Ankerstangen z. T. eine spezifische Geometrie benötigen, die komplementär zur Aufnahme im Werkzeugadapter ausgeführt ist, was die Ankerstangen in der Herstellung aufwändig und damit teuer macht. Darüber hinaus ist auf der Baustelle nicht immer sichergestellt, dass der Handwerker entsprechende Ankerstangen oder, allgemeiner, entsprechende Befestigungselemente zur Verfügung stehen hat, sodass er evtl. auch verschiedene Werkzeugadapter benötigen würde, was jedoch unrealistisch ist. Dies gilt auch für den Fall, dass unterschiedlich große Befestigungselemente gesetzt werden müssen, da im Stand der Technik für unterschiedliche Querschnitte der Befestigungselemente auch unterschiedliche Werkzeugadapter notwendig sind.

Sollte auf der Baustelle das Adapterwerkzeug nicht zu den gelieferten Ankerstangen passen, so bedeutet dies eine erhebliche Zeitverzögerung und einen Aufwand um einen passenden Werkzeugadapter oder andere Ankerstangen zu beschaffen. In der Vergangenheit gab es Überlegungen, um einfachere, kostengünstigere Ankerstangen verwenden zu können, diese mit einem Außengewinde zu versehen, auf welches ganz einfach zwei zueinander verspannte Muttern aufgedreht wurden, welche der Drehmitnahme durch den Drehantrieb dienten. Nachteil dabei ist jedoch, dass vor und nach dem Setzen der Ankerstange die Muttern montiert beziehungsweise wieder entfernt werden müssen, was zeitaufwendig ist, zumal die Muttern nach der Montage des Ankerstange verspannt sind.

Aufgabe der Erfindung ist es deshalb, einen Werkzeugadapter zu schaffen, der obige Nachteile beseitigt.

Dies wird bei einem Werkzeugadapter der eingangs genannten Art dadurch erreicht, dass am Befestigungsende ein flexibles Zugmittel angebracht ist, welches mit einem ersten Ende am Grundkörper angekoppelt ist und über einen flexiblen Abschnitt in ein freies, loses zweites Ende übergeht, wobei der flexible Abschnitt um das Befestigungselement wickelbar ist. Der Grundkörper hat am Befestigungsende eine in Axialrichtung des Werkzeugadapters verlaufende Aufnahme für das mit dem Zugmittel umwickelte Befestigungselement, die das Befestigungselement in Axialrichtung des Werkzeugadapters ausrichtet. Der erfindungsgemäße Werkzeugadapter sieht keine starre Aufnahme vor, welche in direktem Kontakt mit dem Befestigungselement ist und damit auch nur einen Innenquerschnitt aufweist. Beim erfindungsgemäßen Werkzeugadapter wird das Befestigungselement von einem am Grundkörper angebrachten Zugmittel umwickelt und dann in einer Aufnahme axial ausgerichtet. Damit erfolgt die Drehmomentübertragung durch das flexible Zugmittel, wobei hier durch das Prinzip der Seilumschlingung bereits bei wenigen Wicklungen eine enorme Zugspannung im Zugmittel zur Verfügung steht, sodass eine sichere Drehmomentübertragung vom Drehantrieb über den Werkzeugadapter auf das Befestigungselement sichergestellt ist. Das flexible Zugmittel passt sich an die unterschiedlichen Durchmesser oder Querschnittsformen des Befestigungsmittels an, sodass der Werkzeugadapter nicht auf bestimmte Querschnittsgeometrien, Durchmesser usw. des Befestigungselements eingeschränkt ist und als Universaladapter einsetzbar wird.

Das antriebsseitige, zur Ankoppelung an einen Drehantrieb vorgesehene Ende des Grundkörpers kann beispielsweise ein Einsteckende zur Aufnahme in einem Bohrfutter aufweisen. Das antriebsseitige, zur Ankoppelung an einen Drehantrieb vorgesehene Ende des Grundkörpers kann aber beispielsweise auch einen Innenmehrkant aufweisen und insbesondere als Platte ausgeführt sein, in der ein Innenmehrkant vorgesehen ist. In diesem Fall kann am Drehantrieb, das heißt beispielsweise am Bohrhammer, Schrauber oder Schlagschrauber, ein Aussenmehrkant angeordnet sein, der in den Innenmehrkant eingeführt wird.

Das Zugmittel ist gemäß einer Ausführungsform der Erfindung ein Band, insbesondere ein Gewebeband. Dieses Band verläuft in nichtgewickeltem, gestrecktem Zustand vorzugsweise quer zur Längsachse des Werkzeugadapters und würde mit einem Rand sozusagen auf einer gedachten Radialebene zur Längsachse des Werkzeugadapters liegen. Statt als Band, das heißt statt als Element mit einem länglichen Querschnitt, kann das Zugmittel grundsätzlich auch mit einem runden Querschnitt ausgeführt sein.

Das zweite Ende des Zugmittels kann ein Haltemittel zur Befestigung des Zugmittels am Befestigungselement besitzen, was das Umwickeln erleichtert. Dadurch werden bei den ersten Wicklungen auch Probleme durch ein durchrutschendes Befestigungsmittel ausgeschlossen.

Als Haltemittel sind beispielsweise ein Clip oder ein Klebeabschnitt denkbar. Auch ein gummierter Abschnitt brächte Vorteile.

Das Zugmittel kann eine Länge besitzen, die ausreicht, um das Befestigungselement wenigstens zweimal, vorzugsweise wenigstens dreimal zu umschlingen. Wichtig ist, dass das umwickelte Befestigungselement aber noch in die Aufnahme passt.

Das Zugmittel sollte in der Regel an seinem ersten Ende sicher und stabil am Grundkörper befestigt sein. Zur stabilen Drehmomentübertragung ist es vorteilhaft, das Zugmittel mit seinem ersten Ende permanent am Grundkörper zu befestigen, insbesondere in den Grundkörper einzubetten. Dieses Einbetten kann beispielsweise durch Umspritzen des ersten Endes erfolgen. Aber auch ein Verkleben, Verklemmen, Verkeilen, Verschrauben oder/und Vernieten ist möglich. Das Zugmittel kann auch ein Stück weit über das erste Ende hin hinausreichen, beispielsweise um eine besonders feste Mehrfachbefestigung, beispielsweise Mehrfachverschraubung, zu realisieren.

Um eine möglichst direkte Kraftübertragung, ohne Umlenkung im Zugmittel zum Befestigungselement zu erreichen, sollte das linear gestraffte Zugmittel in Umfangsrichtung vom Grundkörper abstehen und insbesondere in Tangentialrichtung in den Grundkörper eintreten.

Eine Ausführungsform der Erfindung sieht vor, dass der Grundkörper aus Kunststoff ist, was das Einbetten des Zugmittels in den Grundkörper erleichtert.

Die Aufnahme für das umwickelte Ende des Befestigungselements ist insbesondere seitlich offen, um das umwickelte Befestigungselement einfach seitlich in die Aufnahme hineinzusetzen oder hineinzudrücken.

Eine Variante sieht vor, die Aufnahme als Rastelement auszubilden, in die das umwickelte Befestigungselement einrastbar ist. Beim Drehen des Werkzeugadapters kann es natürlich zu einer Straffung der Wicklung des Zugmittels kommen, wobei hierbei das Rastelement so ausgeführt sein sollte, dass es auch verschiedene Querschnitte aufnehmen kann und bei einer Reduzierung des Querschnitts noch immer eine Haltekraft auf das umwickelte Befestigungselement ausübt.

Die Aufnahme lässt sich z. B. in Axialrichtung gesehen durch einen C-förmigen Wandabschnitt ausführen. Dieser Wandabschnitt kann einstückig in den Rest des Werkzeugadapters übergehen oder ein separates Teil sein, das am Rest des Werkzeugadapters dann angebracht ist.

Die Aufnahme kann innenseitig einen Kreiszylinderabschnitt bilden, wobei die Mittelachse des Zylinders die Mittelachse des Werkzeugadapters ist. Hierdurch soll sichergestellt werden, dass die Mittelachse des Befestigungsmittels auch mit der Mittelachse des Werkzeugadapters zusammenfällt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht einer Variante des erfindungsgemäßen Werkzeugadapters,
- Figur 2 eine Frontansicht des erfindungsgemäßen Werkzeugadapters,
- Figur 3 den Werkzeugadapter nach den Figuren 1 und 2 mit eingesetzter Ankerstange in Seitenansicht, und
- Figur 4 eine Frontansicht des Werkzeugadapters mit eingesetzter Ankerstange gemäß Figur 3.

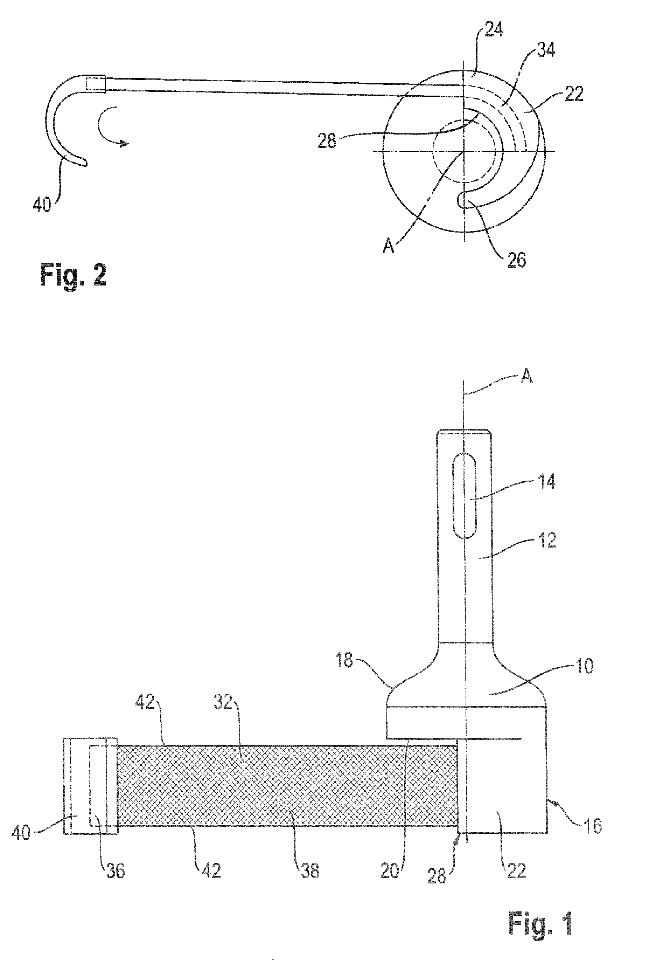

In Figur 1 ist ein Werkzeugadapter, insbesondere ein Setzwerkzeug für eine Ankerstange, gezeigt, die einen starren Grundkörper 10 mit einem stangenartigen, verjüngten, antriebsseitigen Ende 12 zur Ankoppelung an einen Drehantrieb, insbesondere einen Schlagbohrschrauber, Schrauber oder Schlagschrauber, aufweist. Das antriebsseitige Ende 12 kann rein kreiszylindrisch ausgeführt sein oder einen entsprechenden, sogenannten Maschinenanschluss zur formschlüssigen Aufnahme verschiebbarer Mitnahmen am Drehwerkzeug haben. Symbolisch ist deshalb in Figur 1 eine Nut 14 dargestellt. Andere Maschinenanschlüsse sind sogenannte TE-C/SDS plus- oder TE-Y/SDS max-Anschlüsse.

Das dem antriebsseitigen Ende 12 entgegengesetzte Ende des Grundkörpers wird als abtriebsseitiges Befestigungsende 16 bezeichnet.

Das Befestigungsende 16 weist einen von einem mittleren Abschnitt 18 des Grundkörpers 10, der mit einer radialen Stirnseite 20 zum Befestigungsende 16 abschließt, axial abstehenden Fortsatz 22 auf.

Der Fortsatz 22 verläuft, wie in Figur 2 zu sehen ist, C-förmig in Frontansicht, d. h. Axialansicht gesehen, um die Mittelachse A des Werkzeugadapters herum.

In der gezeigten Ausführungsform ist der Fortsatz 20 einstückiger Bestandteil des Rests des Grundkörpers 10.

Ferner erstreckt sich der Fortsatz 22 um mehr als 180° um die Achse A herum und hat in Umfangsrichtung ein erstes Ende 24 sowie ein zweites Ende 26, zu dem hin sich der Fortsatz in Umfangsrichtung, wie Figur 2 zeigt, verjüngen kann, was aber nicht zwingend ist.

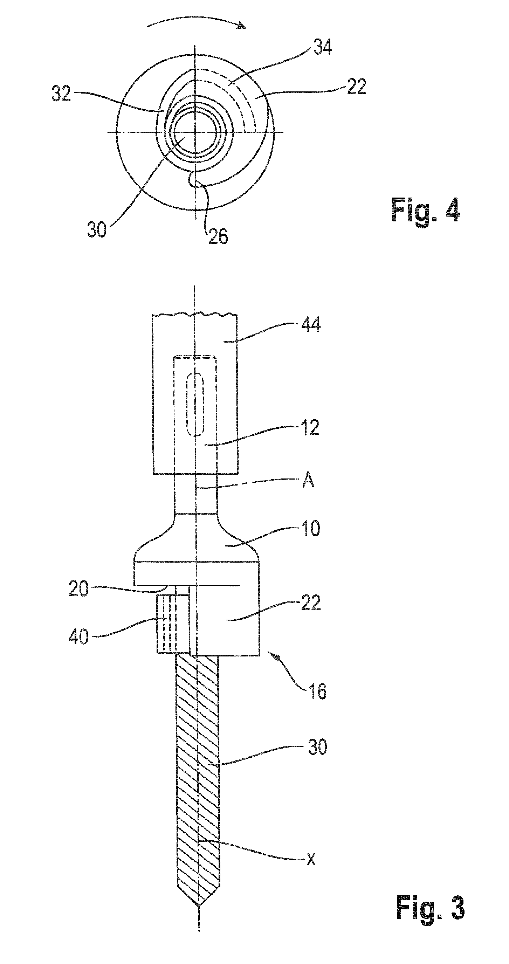

Radial nach innen definiert der Fortsatz 22 eine vorzugsweise kreiszylindrische, zur Achse A konzentrische Aufnahme 28 für ein in das Loch eines Werkstücks einzutreibendes Befestigungselement 30, welches in Figur 3 zu sehen ist und beispielsweise ein Schraubbolzen oder, wie Figur 3 zeigt, eine Ankerstange sein kann.

Um das Befestigungselement 30 drehfest und lagestabil an den Werkzeugadapter anzuschließen, ist am Grundkörper 10 ein flexibles Zugmittel 32 angebracht, welches ein erstes Ende 34 besitzt (siehe Figur 2), das in den Fortsatz 22 eingebettet ist, beispielsweise durch Umspritzen, falls der Grundkörper 10 aus Kunststoff ist.

Das entgegengesetzte, freie Ende 36 des flexiblen Zugmittels 32 steht mit dem ersten Ende 34 über einem flexiblen Abschnitt 38 des Zugmittels 32 in Verbindung.

Am zweiten Ende 36 ist ein Haltemittel 40, beispielsweise ein Clip wie in Figur 2 gezeigt, oder ein Klebeabschnitt angebracht.

In der dargestellten Ausführungsform wird ein flexibles Gewebeband als Zugmittel 32 verwendet.

Wie in den Figuren 1 und 2 zu sehen ist, verläuft das gestreckte, nicht geknickte und ungefaltete Gewebeband vom Fortsatz 22 aus in Axialrichtung gesehen tangential aus dem Grundkörper heraus, wobei die Ränder 42 des Gewebebands jeweils in einer Radialebene zur Achse A verlaufen.

In der gezeigten Variante der Erfindung ist das Ende 26 des C-förmigen Fortsatzes 22 nicht über den Umfang komplett unmittelbar am Mittelabschnitt 18 angebracht, sondern nur abschnittsweise, so dass der Fortsatz 22 in Axialrichtung A gesehen ein gekrümmter, flexibler, frei auslaufender Finger ist und die Aufnahme 28 dadurch als Klick- oder Rastverbindung ausgeführt ist.

Die Aufnahme 28 ist in Axialrichtung gesehen seitlich offen, d. h. in Radialrichtung seitlich offen, um, wie anschließend erläutert wird, das Befestigungselement 30 samt Zugmittel 32 seitlich einklicken zu können.

Zur Befestigung und drehmomentübertragenden Koppelung des Befestigungselements 30 mit dem Werkzeugadapter wird das Befestigungselement 30 mit seinem adapterseitigen Ende am Haltemittel 40 angebracht, hier in den hakenartigen Clip eingesetzt. Der Clip kann flexibel ausgeführt sein, er kann z. B. aus Kunststoff und rutschfest beschichtet sein, um das anschließende Umwickeln des Befestigungselements 30 mit dem Zugmittel 32 zu erlauben und erleichtern. Wie in Pfeilrichtung in Figur 2 gezeigt, wird nach dem Einsetzen des Befestigungselements 30 dieses in Pfeilrichtung gemäß Figur 2 gedreht, sodass das Zugmittel 32 auf das Befestigungselement 30 aufgewickelt wird. Dies erfolgt so lange, bis das Befestigungselement 30 seitlich in die Aufnahme 28 wandert und in diese einrastet, wie Figur 4 zeigt. Damit ist das mit dem Zugmittel 32 umwickelte Befestigungselement in Axialrichtung A im Werkzeugadapter ausgerichtet und gehaltert. Das bedeutet, die Längsachse X des Befestigungselements 30 verläuft koaxial oder nahezu koaxial zur Mittelachse A des Werkzeugadapters. Leichter seitlicher Versatz ist bei den häufig eher niedrigen Drehgeschwindigkeiten beim Einschrauben des Befestigungselements 30 in das Bohrloch jedoch häufig akzeptabel.

Wie in Figur 4 zu sehen ist, ist die Länge des Zugmittels 32 so ausgeführt, dass das Zugmittel mehrfach, wenigstens zweimal oder wenigstens dreimal das Befestigungselement 30 umschlingt.

In Figur 3 ist gezeigt, dass der Werkzeugadapter mit seinem antriebsseitigen Ende 12 in das Futter 44 eines Drehantriebs, hier einer Schlagbohrmaschine, eingesetzt ist. Die Schlagbohrmaschine wird anschließend in Pfeilrichtung gemäß Figur 4 gedreht. Das Zugmittel 32 zieht sich dabei fest um das Befestigungsmittel 30 herum, um dieses drehend mitzunehmen. Hierbei kommt das Seilreibungsprinzip zur Anwendung, d. h. es können sehr hohe Seilspannungen und damit sehr hohe Drehmomente übertragen werden.

Nach dem Einschrauben des Befestigungselements 30 in ein Bohrloch kann das Zugmittel 32 wieder abgewickelt werden. Alternativ kann der Werkzeugadapter vom Befestigungselement 30 abgezogen werden, d. h. das Befestigungselement 30 aus der Aufnahme 28 herausgezogen werden, und das Zugmittel 32 anschließend abgewickelt werden. Der Werkzeugadapter kann dann für den nächsten Befestigungsprozess eingesetzt werden. Aufgrund des Umschlingungsprinzips, welches hierbei angewandt wird, können in ihrer Querschnittsform verschiedene oder im Durchmesser verschiedene Befestigungselemente mit dem gleichen Werkzeugadapter verarbeitet werden.

Bei der dargestellten Ausführungsform ist die Aufnahme 28 ein Abschnitt eines Kreiszylinders, dessen Mittelachse mit der Mittelachse A des Werkzeugadapters zusammenfällt. Natürlich wären auch andere Geometrien für die Aufnahme 28 möglich.

Zu betonen ist, dass über den Werkzeugadapter auch eine schlagende Bewegung, d. h. eine Bewegung in Richtung der Achse A auf das Befestigungsmittel 30 übertragen werden kann. Dies bietet sich beispielsweise besonders dann an, wenn der Werkzeugadapter als Setzwerkzeug verwendet wird, bei dem ein Verbundanker gesetzt wird, d. h. es wird eine mit mehreren Komponenten versehene Patrone in das Bohrloch gegeben, wobei die Zwischenwände zwischen den Räumen innerhalb der Patrone, die für die Komponenten vorgesehen sind, durch die Ankerstange zerstört werden. Alternativ kann natürlich auch der Werkzeugadapter für ein chemisches Injektionssystem eingesetzt werden, bei welchem eine aushärtende Substanz (Reaktionsharz oder Mörtel) in Strangform in das Bohrloch eingebracht wird und anschließend die Ankerstange eingetrieben wird.

Der dargestellte Werkzeugadapter zeichnet sich durch geringe Herstellungskosten, eine hohe Flexibilität, eine einfache Handhabung und die Möglichkeit aus, sehr einfache Ankerstangen und unterschiedliche Ankerstangen verarbeiten zu können. Die Möglichkeit, auf einfache Weise den Werkzeugadapter von einer noch nicht festsitzenden Ankerstange lösen zu können, ist ein großer Vorteil in der Praxis.

Der erfindungsgemäße Werkzeugadapter benötigt keine spezielle Anschlussgeometrie am zu setzenden Befestigungselement, wie es die meisten derzeit verwendeten Werkzeugadapter tun. Auch ist der Setzvorgang mit dem erfindungsgemäßen Werkzeughalter deutlich einfacher und schneller als bei der Verwendung von Doppelmuttern als Werkzeugaufnahme. Die Geometrie des Befestigungselements im Bereich der Werkzeugaufnahme kann sehr variabel sein. Insbesondere kann das Befestigungselement auch ein Betoneisen sein.

## Patentansprüche

1. Werkzeugadapter, mit einem starren Grundkörper (10) mit einem antriebsseitigen, zur Ankoppelung an einen Drehantrieb vorgesehenen Ende (12) und einem entgegengesetzten, abtriebsseitigen Befestigungsende (16) zur lösbaren Anbringung eines anzutreibenden Befestigungselements (30), insbesondere einer Ankerstange oder eines Betoneisens, **dadurch gekennzeichnet, dass** am Befestigungsende (16) ein flexibles Zugmittel (32) angebracht ist, das mit einem ersten Ende (34) am Grundkörper (10) angekoppelt ist und über einen flexiblen Abschnitt (38) in ein freies, loses, zweites Ende (36) übergeht, wobei der flexible Abschnitt (38) um das Befestigungselement (30) wickelbar ist, und dass der Grundkörper (10) am Befestigungsende (16) eine in Axialrichtung (A) des Werkzeugadapters verlaufende Aufnahme (28) für das mit dem Zugmittel (32) umwickelte Befestigungselement (30) aufweist, wobei die Aufnahme das Befestigungselement (30) in Axialrichtung des Werkzeugadapters ausrichtet.

2. Werkzeugadapter nach Anspruch 1, **dadurch gekennzeichnet, dass** das Zugmittel (32) ein Band, insbesondere Gewebeband, ist.

3. Werkzeugadapter nach Anspruch 1 oder 2, **dadurch gekennzeichnet, dass** am zweiten Ende (36) des Zugmittels (32) ein Haltemittel (40) zur Befestigung des Zugmittels (32) am Befestigungselement (30) vorgesehen ist.

4. Werkzeugadapter nach Anspruch 3, **dadurch gekennzeichnet, dass** das Haltemittel (40) ein Clip oder Klebeabschnitt ist.

5. Werkzeugadapter nach einem der vorhergehenden Ansprüche, **dadurch gekennzeichnet, dass** das Zugmittel (32) eine Länge besitzt, die ausreicht, um das Befestigungselement (30) wenigstens zweimal, vorzugsweise wenigstens dreimal zu umschlingen.

6. Werkzeugadapter nach einem der vorhergehenden Ansprüche, **dadurch gekennzeichnet, dass** das Zugmittel (32) mit seinem ersten Ende (34) permanent am Grundkörper (10) befestigt ist, insbesondere in den Grundkörper (10) eingebettet ist.

7. Werkzeugadapter nach einem der vorhergehenden Ansprüche, **dadurch gekennzeichnet, dass** das Zugmittel in Umfangsrichtung vom Grundkörper absteht und insbesondere in Tangentialrichtung in den Grundkörper eintritt.

8. Werkzeugadapter nach einem der vorhergehenden Ansprüche, **dadurch gekennzeichnet, dass** der Grundkörper (10) aus Kunststoff ist.

9. Werkzeugadapter nach einem der vorhergehenden Ansprühe, **dadurch gekennzeichnet, dass** die Aufnahme (28) seitlich offen ist, um das umwickelte Befestigungselement (30) seitlich in die Aufnahme (28) einsetzen zu können.

10. Werkzeugadapter nach einem der vorhergehenden Ansprüche, **dadurch gekennzeichnet, dass** die Aufnahme (28) als Rastelement ausgebildet ist, in die das umwickelte Befestigungselement (30) einrastbar ist.

11. Werkzeugadapter nach den Ansprüchen 9 und 10, **dadurch gekennzeichnet, dass** die Aufnahme (28) in Axialrichtung gesehen durch einen C-förmigen Wandabschnitt gebildet ist.

12. Werkzeugadapter nach einem der vorhergehenden Ansprüche, **dadurch gekennzeichnet, dass** die Aufnahme (28) innenseitig einen kreiszylindrischen Abschnitt bildet, wobei die Mittelachse des Zylinders die Mittelachse (A) des Werkzeugadapters ist.

13. Befestigungseinheit mit einem Werkzeugadapter nach einem der vorhergehenden Ansprüche und einem Befestigungselement (30), welches vom Zugmittel (32) umwickelbar ist, im umwickelten Zustand in die Aufnahme (28) einsetzbar ist und axial vom Werkzeugadapter absteht.

14. Verfahren zum Einbringen eines Befestigungselements (30) in ein Bohrloch, **dadurch gekennzeichnet, dass** das Befestigungselement (30) mittels Seilreibung in Drehung versetzt wird.
